# EUROPÄISCHE PATENTSCHRIFT

(11) **EP 1 631 734 B1**
(45) Veröffentlichungstag und Bekanntmachung des Hinweises auf die Patenterteilung: **01.08.2007**
(21) Anmeldenummer: 04738591.9
(22) Anmeldetag: 03.06.2004
(51) Int. Cl.: F01D 5/26, F01D 5/02, F01D 5/14, F01D 25/04, F04D 29/32

(54) **ROTOR FÜR EINE GASTURBINE**
ROTOR FOR A GAS TURBINE
ROTOR POUR TURBINE A GAZ

(30) Priorität: 12.06.2003 DE 10326533
(43) Veröffentlichungstag der Anmeldung: 08.03.2006
(73) Patentinhaber: MTU Aero Engines GmbH, 80995 München (DE)
(72) Erfinder: BORUFKA, Hans-Peter, 82319 Starnberg (DE); PIRKER, Klaus, 80995 München (DE)
(86) Internationale Anmeldenummer: PCT/DE2004/001137
(87) Internationale Veröffentlichungsnummer: WO 2004/111393

(56) Entgegenhaltungen:
- EP-A- 0 921 274
- US-A- 1 534 721
- US-A- 3 006 603

## Beschreibung

Die Erfindung betrifft einen Rotor für eine Gasturbine nach dem Oberbegriff des Patentanspruchs 1.

Moderne Gasturbinen, insbesondere moderne Flugzeugtriebwerke, müssen höchsten Ansprüchen im Hinblick auf Zuverlässigkeit, Gewicht, Leistung, Wirtschaftlichkeit und Lebensdauer gerecht werden. Bei der Entwicklung solcher Triebwerke, welche die obigen Anforderungen erfüllen, sind verschiedene Kriterien zu beachten. Exemplarisch sei hier auf die Aerodynamik, Schwingungsmechanik, Festigkeit und Wellendynamik sowie auf die Fertigungstechnik und der Werkstofftechnik verwiesen.

Gasturbinen, insbesondere Flugzeugtriebwerke, bestehen aus mehreren Baugruppen. Als Baugruppen von Gasturbinen, insbesondere Flugzeugtriebwerken, seien hier die Brennkammer, der Lüfter bzw. Fan, Hochdruckturbine sowie Niederdruckturbine und Hochdruckverdichter sowie Niederdruckverdichter genannt. Hochdruckverdichter, Niederdruckverdichter, Hochdruckturbine sowie Niederdruckturbine umfassen in der Regel mehrere Stufen. Beim Lüfter bzw. Fan rotiert ein beschaufelter Lüfterrotor gegenüber einem feststehenden Lüftergehäuse. Beim Verdichter, insbesondere beim Hochdruckverdichter und Niederdruckverdichter, sowie bei der Turbine, insbesondere der Hochdruckturbine und Niederdruckturbine, rotiert ebenfalls ein beschaufelter Rotor gegenüber einem feststehenden Stator. Die einem Turbinenrotor oder Verdichterrotor zugeordneten Schaufeln, die mit dem Rotor zusammen rotieren, bezeichnet man als Laufschaufeln. Diese Laufschaufeln des rotierenden Rotors rotieren relativ zu dem Stator zugeordneten, feststehenden Leitschaufeln.

Das Document EP 0 921 274-A2 offenbart einen Rotor für eine Gasturbine gemäß dem Stand der Technik.

Bei der Rotation eines beschaufelten Rotors gegenüber einem feststehenden Stator, insbesondere einem feststehenden Gehäuse oder feststehenden Leitschaufeln, werden die feststehenden Baugruppen durch die Bewegung des Rotors zu Schwingungen angeregt. Schwingungen innerhalb der Gasturbine bzw. des Flugzeugtriebwerks sind jedoch von Nachteil, da in Folge der Schwingungen Baugruppen der Gasturbine einer erhöhten Belastung und damit einem erhöhten Verschleiß unterliegen. lnsbesondere müssen Resonanzschwingungen vermieden werden. Eine Gasturbine muss demnach auch im Hinblick auf die Schwingungsmechanik optimiert sein.

Hiervon ausgehend liegt der vorliegenden Erfindung das Problem zu Grunde, einen neuartigen Rotor für eine Gasturbine sowie eine entsprechende Gasturbine zu schaffen, die im Hinblick auf die Schwingungsmechanik optimiert sind.

Dieses Problem wird dadurch gelöst, dass der eingangs genannte Rotor durch die Merkmale des kennzeichnenden Teils des Patentanspruchs 1 weitergebildet ist.

Erfindungsgemäß sind die Schaufeln des Rotors innerhalb des oder jeden Schaufelrings mit einem unterschiedlichen Abstand bzw. einer unterschiedlichen Schaufelteilung zueinander angeordnet. Hierdurch wird sichergestellt, dass sich die Frequenz, mit welcher die stillstehenden Baugruppen zur Schwingung angeregt werden, ändert. Somit werden Resonanzschwingungen vermieden.

Nach einer vorteilhaften Weiterbildung der Erfindung ist bei sich diametral gegenüberliegenden Schaufeln der Abstand zur jeweils nächst vorn liegenden Schaufel sowie der Abstand zur jeweils nächst hinten liegenden Schaufel gleich groß. Der Abstand der Schaufeln innerhalb des oder jeden Schaufelrings ist derart bemessen, dass Unwuchten sich einander aufheben. Auch dies hat schwingungsmechanische Vorteile.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: einen erfindungsgemäßen Rotor in Vorderansicht; und
- Fig. 2:: eine schematisierte Darstellung des erfindungsgemäßen Rotors zur Verdeutlichung der Laufschaufelanordnung ebenfalls in Vorderansicht.

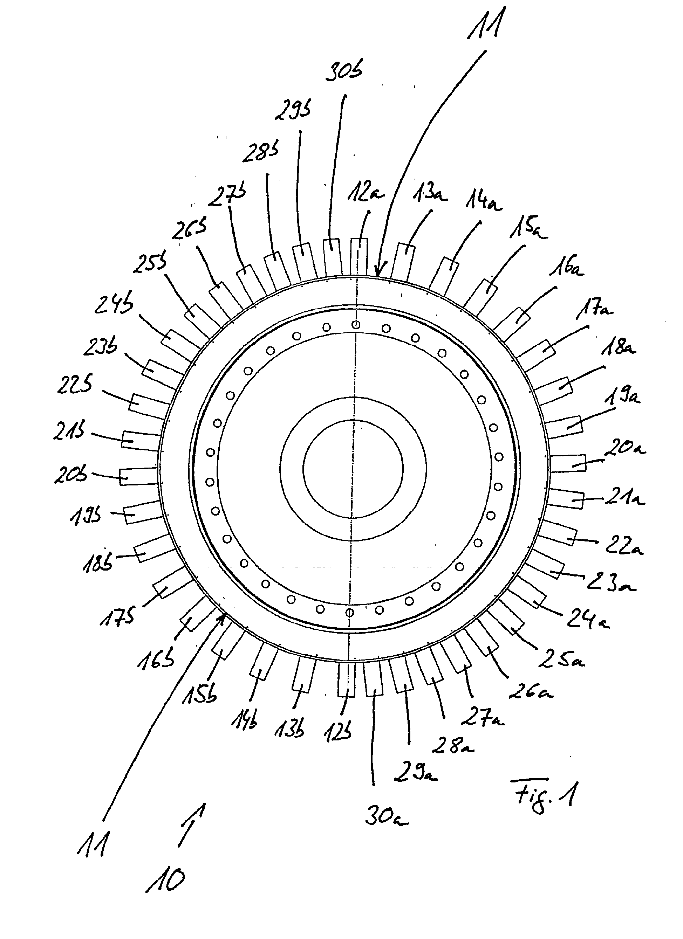

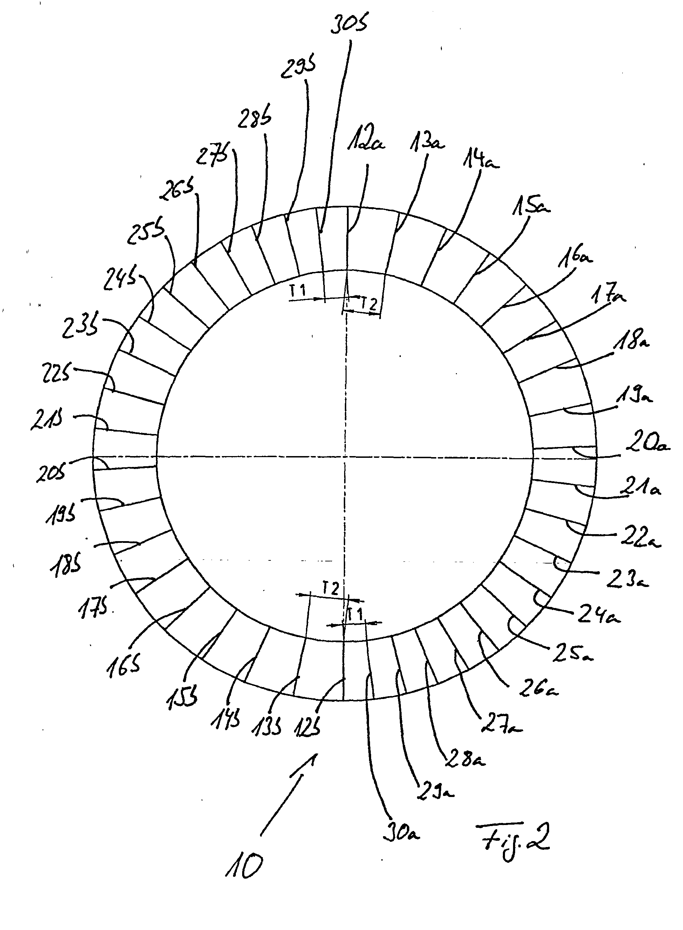

Nachfolgend wird die hier vorliegende Erfindung unter Bezugnahme auf Fig. 1 und 2 in größerem Detail erläutert. Fig. 1 zeigt einen Rotor mit mehreren am Rotor angeordneten Schaufeln in Vorderansicht. Fig. 2 zeigt einen stark schematisierte Darstellung eines Rotors zur Verdeutlichung des erfindungsgemäßen Konstruktionsprinzips.

Fig. 1 zeigt einen Rotor 10 mit mehreren, an einer äußeren Mantelfläche 11 bzw. am Umfang des Rotors 10 angeordneten Schaufeln 12a, 13a, 14a, 15a, 16a, 17a, 18a, 19a, 20a, 21a, 22a, 23a, 24a, 25a, 26a, 27a, 28a, 29a, 30a, 12b, 13b, 14b, 15b, 16a, 17b, 18b, 19b, 20b, 21 b, 22b, 23b, 24b, 25b, 26b, 27b, 28b, 29b und 30b. Die in Fig. 1 gezeigten Schaufeln 12a bis 30b bilden einen Schaufelring, der entlang der Mantelfläche 11 bzw, des Umfangs des Rotors 10 verläuft. Dieser Schaufelring bildet eine Stufe des Rotors. Zur Bildung mehrerer Stufen können mehrere solcher Schaufelringe axial hintereinander angeordnet sein.

Zur Optimierung des Schwingungsverhaltens des Rotors 10 bzw. einer den Rotor 10 aufweisenden Gasturbine sind die Schaufeln 12a bis 30b innerhalb des Schaufelrings mit einem unterschiedlichen Abstand voneinander angeordnet. Mit anderen Worten ausgedrückt, bedeutet dies, dass sich die Schaufelteilung innerhalb des Schaufelrings ändert.

Der Abstand der Schaufeln innerhalb des oder jeden Schaufelrings kann sich in Umfangsrichtung bzw. in Drehrichtung des Rotors 10 kontinuierlich oder diskontinuierlich ändern. Unter kontinuierlicher Änderung des Abstands der Schaufeln bzw. unter kontinuierlicher Änderung der Schaufelteilung soll verstanden werden, dass sich der Abstand zwischen den Schaufeln von Schaufel zu Schaufel entweder kontinuierlich erhöht oder kontinuierlich verringert. Unter einer diskontinuierlichen Änderung der Schaufelteilung ist demnach zu verstehen, dass die Änderung des Abstands zwischen den einzelnen Schaufeln 12a bis 30b dieser Gesetzmäßigkeit nicht folgt. Unabhängig davon, ob sich die Schaufelteilung bzw. der Abstand der Schaufeln 12a bis 30b nun kontinuierlich oder diskontinuierlich ändert, ist jedoch darauf zu achten, dass sich die infolge der verändernden Schaufelteilung ergebenden Unwuchten am Rotor 10 einander aufheben. In der Summe verfügt der erfindungsgemäße Rotor 10 demnach über keinerlei Unwucht.

Fig. 1 zeigt eine bevorzugte Anordnung der Schaufeln 12a bis 30b eines Schaufelrings eines Rotors 10 entlang der Mantelfläche 11 desselben. Sich diametral gegenüberliegende Schaufeln des Rotors 10 sind mit gleichen Bezugsziffern 12, 13, 14 ... 30 versehen, jedoch durch den Zusatz a bzw. b voneinander zu unterscheiden. Die Schaufeln 12a bis 30b des Rotors 10 sind nun derart entlang der Mantelfläche 11 bzw. des Umfangs des Rotors 10 angeordnet, dass bei sich diametral gegenüberliegenden Schaufeln 12a bzw. 12b, 13a bzw. 13b, 14a bzw. 14b, ... 30a bzw. 30b der Abstand zur jeweils nächst vorn liegenden Schaufeln sowie der Abstand zur jeweils nächst hinten liegenden Schaufeln gleich ist. Für die sich diametral gegenüberliegenden Schaufeln 12a uns 12b bedeutet dies, dass der Abstand zwischen den Schaufeln 12a und 13a dem Abstand zwischen den Schaufeln 12b und 13b entspricht. Weiterhin entspricht der Abstand zwischen den Schaufeln 12a und 30b dem -Abstand zwischen den Schaufeln 12b und 30a. Analog entspricht der Abstand zwischen den Schaufeln 13a und 14a dem Abstand zwischen den Schaufeln 13b und 14b oder der Abstand zwischen den Schaufeln 23a und 24a entspricht dem Abstand zwischen den Schaufeln 23b und 24b.

Der in Fig. 1 gezeigte Schaufelring aus den Schaufeln 12a bis 30b ist demnach in zwei Halbringe unterteilt, wobei ein erster Halbring die Schaufeln 12a bis 30a und ein zweiter Halbring die Schaufeln 12b bis 30b umfasst. Ausgehend von der Schaufel 12a bzw. 12b verringert sich der Abstand zur nächsten Schaufel innerhalb jedes der Halbrings kontinuierlich, d.h. der Abstand zwischen den Schaufeln 12a und 13a bzw. 12b und 13b innerhalb des Schaufelrings bzw. des entsprechenden Halbrings ist am größten, und der Abstand zwischen den Schaufeln 29a und 30a sowie 29b und 30b innerhalb der Halbringe ist am geringsten. Der geringste Abstand zwischen Schaufeln innerhalb des gesamten Schaufelrings ist zwischen den benachbarten Schaufeln der Halbringe ausgebildet, also einerseits zwischen den Schaufeln 12a und 30b sowie zwischen den Schaufeln 12b und 30a.

Durch die im Zusammenhang mit Fig. 1 beschriebene Anordnung der Schaufeln 12a bis 30b entlang des Umfangs des Rotors 10 ist gewährleistet, dass sich die Frequenz, mit welcher der Rotor bzw. mit welcher die Schaufeln des Rotors feststehende Baugruppen einer Gasturbine zur Schwingung anregen, stetig ändert. Demnach werden feststehende Baugruppen der Gasturbine nicht in gleich bleibender Frequenz angeregt und demnach nicht in Resonanzschwingung versetzt. Dies sorgt insgesamt für eine schwingungsoptimierte Konstruktion des Rotors 10 bzw. der den Rotor 10 umfassenden Gasturbine. Weiterhin ist mit der im Zusammenhang mit Fig. 1 beschriebenen Schaufelanordnung gewährleistet, dass der Rotor 10 keinerlei Unwucht aufweist.

Wie bereits erwähnt, können in axialer Richtung des Rotors 10 mehrere derartige Schaufelring aus einzelnen Schaufeln angeordnet sein. Dabei kann sowohl für jeden Schaufelring die Anordnung der Schaufeln innerhalb des jeweiligen Schaufelrings gleich oder auch unterschiedlich sein.

Fig. 2 verdeutlich stark schematisiert das erfindungsgemäße Konstruktionsprinzip für den Rotor 10. So sind in Fig. 2 die Längsachsen bzw. Symmetrieachsen der einzelnen Schaufeln 12a bis 30b als Striche dargestellt. Der Abstand zwischen diesen Längsachsen der Schaufeln bestimmt die Schaufelteilung innerhalb des Schaufelrings. Der Abstand bzw. die Schaufelteilung ist in Fig. 2 mit T1 und T2 beziffert. Bei sich diametral gegenüberliegenden Schaufeln ist die Schaufelteilung wiederum derart ausgelegt, dass die Schaufelteilung zur jeweils nächst vorn liegenden Schaufel sowie zur jeweils nächst hinten liegenden Schaufel gleich ist.

Das oben beschriebene, erfindungsgemäße Konstruktionsprinzip für einen Rotor ist für alle Rotoren einer Gasturbine, insbesondere für alle Rotoren eines Flugzeugtriebwerks einsetzbar. So kann der Rotor als Turbinenrotor oder Verdichterrotor einer Turbine oder eines Verdichters einer Gasturbine, insbesondere eines Flugzeugtriebwerks, ausgebildet sein. ln diesem Fall handelt es sich bei den Schaufeln 12a bis 30b um Laufschaufeln des Turbinenrotors oder Verdichterrotors, die gegenüber feststehenden Leitschaufeln eines Stators bzw. eines Gehäuses der Gasturbine rotieren. Der Rotor kann aber auch als Lüfterrotor eines Lüfters bzw. Fan einer Gasturbine ausgebildet sein. Auch kann es sich bei dem Rotor um ein sogenanntes Blisk (Bladed Disk) oder Bling (Bladed Ring) einer Gasturbine handeln, wobei bei einem Blisk oder einem Bling die Schaufeln integraler Bestandteil des Rotors sind.

## Patentansprüche

1. Rotor für eine Gasturbine, mit mehreren am Rotor (10) angeordneten, zusammen mit dem Rotor (10) rotierenden Schaufeln (12a, 13a, ... 29b, 30b), das heißt mit Laufschaufeln, wobei die Schaufeln einen Schaufelring bilden, wobei die Schaufeln (12a, 13a, ... 29b, 30b) innerhalb des Schaufelrings mit einem unterschiedlichen Abstand voneinander und somit einer unterschiedlichen Schaufelteilung angeordnet sind, wobei sich der Abstand der Schaufeln (12a, 13a, ... 29b, 30b) Innerhalb des Schaufelrings in Umfangsrichtung kontinulerlich oder diskontinulerlich ändert, und wobei der Abstand der Schaufeln (12a, 13a, ... 29b, 30b) innerhalb des Schaufelrings derart bemessen ist, dass Unwuchten einander aufheben, **dadurch gekennzeichnet, dass** der Rotor mehrere axial hintereinander angeordnete Schaufelringe aufweist, und dass Innerhalb jedes Schaufelrings die Schaufeln mit einem unterschiedlichen Abstand voneinander angeordnet sind.

2. Rotor nach Anspruch 1, **dadurch gekennzeichnet, dass** für jeden Schaufelring die Anordnung der Schaufeln innerhalb des jeweiligen Schaufelrings unter- die Anordnung der Schaufeln innerhalb des jeweiligen Schaufelrings unterschiedlich ist.

3. Rotor nach Anspruch 1 oder 2, **dadurch gekennzeichnet, dass** der Rotor als Turbinenrotor oder Verdichterrotor einer Gasturbine, insbesondere eines Flugzeugtriebwerks, ausgebildet ist.

4. Rotor nach Anspruch 1 oder 2, **dadurch gekennzeichnet, dass** der Rotor als Lüfterrotor einer Gasturbine, Insbesondere eines Flugzeugtriebwerks, ausgebildet ist.

5. Rotor nach einem der vorhergehenden Ansprüche, **dadurch gekennzeichnet, dass** der Rotor als Blisk (Bladed Disk) oder Bling (Bladed Ring) einer Gasturbine, insbesondere eines Flugzeugtriebwerks, ausgebildet ist, wobei die Schaufeln integraler Bestandtell des Rotors sind.

## Claims

1. A rotor for a gas turbine having a plurality of blades (12a, 13a, ... 29b, 30b) that are arranged on the rotor (10) and rotate together with the rotor (10), that is, having rotating blades, with the blades forming a blade ring, the blades (12a, 13a, ... 29b, 30b) being arranged inside the blade ring with differing spacing from each other and thus with differing blade pitches, the spacing of the blades (12a, 13a, ... 29b, 30b) within the blade ring changing continuously or discontinuously in the circumferential direction, and the spacing of the blades (12a, 13a, ... 29b, 30b) within the blade ring being dimensioned in such a way that imbalances cancel each other out, **characterised in that** the rotor has a plurality of blade rings that are arranged axially one after the other, and **in that** within each blade ring the blades are arranged with differing spacing from each other.

2. A rotor according to claim 1, **characterised in that** the arrangement of the blades within the respective blade ring is different for each blade ring.

3. A rotor according to claim 1 or 2, **characterised in that** the rotor is formed as a turbine rotor or compressor rotor of a gas turbine, in particular of an aircraft engine.

4. A rotor according to claim 1 or 2, **characterised in that** the rotor is formed as a fan rotor of a gas turbine, in particular of an aircraft engine.

5. A rotor according to one of the preceding claims, **characterised in that** the rotor is formed as a blisk (bladed disk) or a bling (bladed ring) of a gas turbine, in particular of an aircraft engine, with the blades being an integral part of the rotor.

## Revendications

1. Rotor pour une turbine à gaz, comprenant plusieurs ailettes (12a, 13a,..., 29b, 30b) disposées sur le rotor (10) et tournant en même temps que le rotor (10), c'est-à-dire avec des ailettes mobiles, les ailettes formant une bague d'ailette, les ailettes (12a, 13a,..., 29b, 30b) étant disposées à l'intérieur de la bague d'ailette à une distance différente les unes des autres et donc avec une division d'ailette différente, l'espacement des ailettes (12a, 13a,..., 29b, 30b) à l'intérieur de la bague d'ailette changeant de façon continue ou discontinue dans le sens périphérique, et l'espacement des ailettes (12a, 13a,..., 29b, 30b) à l'intérieur de la bague d'ailette étant dimensionné de telle sorte que des déséquilibres s'annulent réciproquement, **caractérisé en ce que** le rotor présente plusieurs bagues d'ailette disposées axialement les unes derrière les autres, et **en ce que**, à l'intérieur de chaque bague d'ailette, les ailettes sont disposées avec un espacement différent les unes des autres.

2. Rotor selon la revendication 1, **caractérisé en ce que**, pour chaque bague d'ailette, l'agencement des ailettes à l'intérieur de la bague d'ailette respective est différent.

3. Rotor selon la revendication 1 ou 2, **caractérisé en ce que** le rotor est conçu comme un rotor de turbine ou rotor de compresseur d'une turbine à gaz, en particulier d'un groupe moteur d'avion.

4. Rotor selon la revendication 1 ou 2, **caractérisé en ce que** le rotor est conçu comme rotor de ventilateur d'une turbine à gaz, en particulier d'un groupe moteur d'avion.

5. Rotor selon l'une quelconque des revendications précédentes, **caractérisé en ce que** le rotor est conçu comme Blisk (Bladed Disk) ou Bling (Bladed Ring) d'une turbine à gaz, en particulier d'un groupe moteur d'avion, les ailettes faisant partie intégrante du rotor.
